# EUROPÄISCHE PATENTSCHRIFT

(11) **EP 0 664 075 B1**
(45) Veröffentlichungstag und Bekanntmachung des Hinweises auf die Patenterteilung: **12.04.2000**
(21) Anmeldenummer: 95100654.3
(22) Anmeldetag: 19.01.1995
(51) Int. Cl.: A01D 34/66

(54) **An einem Schlepper ansetzbares Tellermähwerk**
Tractor mounted disc mower
Faucheuse à disques accouplée à un tracteur

(30) Priorität: 20.01.1994 DE 4401500
(43) Veröffentlichungstag der Anmeldung: 26.07.1995
(73) Patentinhaber: Mörtl, Friedrich, 97737 Gemünden/Main (DE)
(72) Erfinder: Mörtl, Friedrich, Dipl.-Ing., D-97737 Gemünden/Main (DE)
(74) Vertreter: Rehberg, Elmar, Dipl.-Ing.

(56) Entgegenhaltungen:
- EP-A- 0 097 943
- EP-A- 0 165 624
- DE-A- 1 582 357
- DE-A- 1 917 796
- DE-A- 1 936 054
- DE-A- 1 944 318
- DE-A- 2 222 415
- NL-A- 8 601 789
- US-A- 2 625 784

## Beschreibung

Die Erfindung bezieht sich auf ein an einem Schlepper ansetzbares Tellermähwerk, mit einem sich im wesentlichen quer zur Fahrtrichtung erstreckenden Mähbalken, auf dem mindestens drei Mähteller nebeneinander angeordnet sind, die gleichsinnig umlaufend angetrieben sind und von denen zwei benachbarte Mähteller mit das Mähgut im wesentlichen in einer Förderrichtung quer zur Fahrtrichtung fördernden Förderorganen versehen sind, deren größter Außendurchmesser etwa halb so groß wie der Durchmesser der Mähteller ist, während der den beiden benachbarten Mähtellern in Förderrichtung des Mähgutes folgende dritte Mähteller keine Förderorgane trägt. Solche Tellermähwerke werden insbesondere front- oder heckseitig an einen Schlepper oder ein anderes Fahrzeug angehängt und dienen dem Mähen von Gras oder anderem Mähgut mit möglichst großer Arbeitsbreite.

Ein Tellermähwerk der eingangs beschriebenen Art ist aus der US-A-2 625 784 bekannt, bei dem mindestens drei nebeneinander angeordnete Mähteller gleichsinnig umlaufend angetrieben sind. Die Mähteller sind sägezahnförmig begrenzt und überlappen einander, so daß sie in unterschiedlichen Ebenen mähen. Mindestens zwei benachbarte Mähteller sind mit trommel- oder kegelartig ausgebildeten Förderorganen versehen, deren größter Außendurchmesser etwa halb so groß wie der Durchmesser der Mähteller ist. Die konischen Förderorgane sollen eine kombinierte Förderwirkung haben, nämlich einerseits eine Förderung des Mähgutes quer zur Fahrtrichtung und andererseits eine hebende Wirkung auf das Mähgut. Die Förderorgane sind grundsätzlich rotationssymmetrisch ausgebildet, so daß ihre Anhebewirkung auf das Mähgut nur begrenzt möglich ist; bei zylindrischer Ausbildung fehlt diese Anhebewirkung gänzlich. Um die Förderwirkungen zu verstärken, können die Förderorgane mit einer rauhen Beschichtung versehen sein. Alternativ oder in Kombination mit der rauhen Beschichtung kann eine schraubengangförmig ausgebildete Nut in dem Kegelmantel des Förderorgans vorgesehen sein. Der diesen beiden benachbarten Mähtellern in Förderrichtung für das Mähgut folgende dritte, letzte Mähteller besitzt keine Förderorgane.

AUs der EP-A-97 943 ist ein Tellermähwerk bekannt, das einen sich im wesentlichen quer zur Fahrtrichtung erstreckenden Mähbalken aufweist, auf dem eine Mehrzahl von Mähtellern in bekannter Weise rotierend angetrieben sind. Die Mähteller tragen Messer, die sich in der Schneidebene des Tellermähwerks bewegen. Es sind jeweils drei benachbarte Mähteller wirkungsmäßig zusammengefaßt, von denen in Förderrichtung quer zur Fahrtrichtung des Tellermähwerks zwei benachbarte Mähteller gleichsinnig umlaufend angetrieben sind, während der in Förderrichtung folgende dritte Mähteller entgegengesetzt angetrieben wird. Die beiden benachbarten gleichsinnig umlaufenden Mähteller sind mit Förderorganen versehen, die eine Förderwirkung auf das Mähgut ausüben, die im wesentlichen quer zur Fahrtrichtung gerichtet ist, so daß das Mähgut dem dritten Mähteller zugeleitet wird. Wenn das Tellermähwerk mit insgesamt sechs Mähtellern ausgestattet ist und die Ablage des Mähguts in einem mittleren Schwad erfolgen soll, sind die anderen drei Mähteller entsprechend symmetrisch ausgebildet und angetrieben, so daß sich an diesem Mähwerk im Mittelbereich zwei Ströme von Mähgut treffen, die zu einem Schwad vereinigt werden. Da die beiden letzten Mähteller der beiden Züge von je drei Mähtellern, die wiederum benachbart sind, in ihrem Mähspalt mit ihren Messern beide nach vorn umlaufen, ergibt sich an dieser Stelle je nach Mähbedingungen eine Umlegewirkung auf die einzelnen Grashalme, die sich negativ auswirkt. Es entsteht an dieser Stelle ein Streifen, in dem die nach dem Mähvorgang stehengebliebenen Mähgutteile, insbesondere Stoppeln, eine vergleichsweise größere Wuchshöhe aufweisen. Dies stört nicht nur ein gleichmäßiges Mähbild, sondern kann - je nach Mähgut - auch zu entsprechenden Futterverlusten führen. Bedingt durch die entgegengesetzte Drehrichtung der beiden benachbarten Mähteller je eines Zuges aus drei Mähtellern nach außen entsteht ein Schwad des gemähten Mähguts, der nicht in der Mitte des Schwades seine größte Höhe erreicht, sondern bei dem die größte Höhe an zwei Stellen vorliegt. Bedingt durch die Drehrichtungen wird jeder Mähgutstrom gleichsam zwischen dem letzten und dem vorletzten Mähteller seines Zuges zusammengedrängt. Diese Zusammendrängungswirkung kann sich weiterhin nachteilig äußern. Das von der Seite durch zwei benachbarte gleichsinnig drehende Mähteller abgemähte Mähgut kann sich zwischen dem letzten und dem vorletzten Mähteller eines Zuges so ansammeln, daß hier eine gewisse Stauwirkung einerseits eintritt und andererseits das Mähgut an dieser Stelle eine Umknickwirkung auf noch nicht gemähtes, noch stehendes Mähgut ausübt. Auch dies kann zu einer Beeinträchtigung des Schnittbildes führen.

Aus der DE-A-2 222 415 ist ein Außenabteiler für Rotationsmähwerke in Form eines oder mehrerer Höckers bekannt, die die Aufgabe haben, eine Teilung von gemähtem und ungemähtem Mähgut herbeizuführen. Die Höcker sind dazu nur am äußersten Mähteller und zwar auf einem solchen Durchmesser vorgesehen, der etwa so groß wie der Durchmesser des Mähtellers ist. Auf diesem Mähteller ist kein trommel- oder kegelartig ausgebildetes Förderorgan vorgesehen. Damit kann ein Teil des Mähgutes des äußersten Mähtellers bereits über die Höcker nach hinten abfließen, was bei trommelartigen Förderorganen nicht möglich ist. Die Abteiler-Höcker weisen mit der Drehrichtung ansteigende Arbeitskanten auf und verlaufen etwa in einem Kreisbogen um die Drehachse des Mähtellers. Auf eine Förderung des Mähgutes von einem Mähteller auf den benachbarten Mähteller, also quer zur Fahrtrichtung, haben die Abteil-Höcker keinen Einfluß.

Der Erfindung liegt die Aufgabe zugrunde, ein Tellermähwerk der eingangs beschriebenen Art bereitzustellen, mit dem es möglich ist, das Mähgut in einem Schwad geringer Breite abzulegen und gleichzeitig ein sauberes streifenloses Schnittbild zu erzielen.

Erfindungsgemäß wird dies bei dem Tellermähwerk der eingangs beschriebenen Art dadurch erreicht, daß zumindest der dem dritten Mähteller vorangehende Mähteller zusätzlich zu den im wesentlichen quer zur Fahrtrichtung fördernden Förderorganen weitere, separate Förderelemente aufweist, die als Förderrampen ausgebildet sind und entgegen der Drehrichtung des Mähtellers ansteigende Flächen aufweisen, sodaß das Mähgut von den Förderelementen im wesentlichen aus der Schneidebene der Mähteller angehoben wird.

Die Erfindung geht von dem Gedanken aus, zumindest den dem dritten Mähteller vorangehenden Mähteller eines Zuges aus mindestens drei im gleichen Drehsinn angetriebenen Mähtellern mit zusätzlich zu den Förderorganen anzuordnenden, separaten Förderelementen auszustatten. Die Förderorgane üben auf das gemähte Mähgut eine im wesentlichen quer zur Fahrtrichtung gerichtete Förderwirkung aus. Mit den Förderelementen wird das gemähte Mähgut im wesentlichen aus der Schneidebene der Mähteller nach oben angehoben. Da das Mähgut durch die im Mittelbereich der Mähteller angeordneten Förderorgane im vorderen Bereich der Mähteller in Förderrichtung übergeben wird, liegt in diesem vorderen Bereich an dem letzten Mähteller eine Bewegungskomponente vor, die sich in Förderrichtung des Mähgutes auswirkt und nicht entgegengesetzt dazu. Der Strom des Mähgutes wird an dem letzten ohne Förderorgane ausgebildeten Mähgutteller nicht abgestoppt, und es findet auch keine Aufstauwirkung an dieser Stelle statt, sondern es wird dafür gesorgt, daß ein kontinuierlicher Fluß des Mähgutes auch an dieser Stelle erzielt und das Mähgut zu einem kompakten Schwad geformt und so hinter dem Mähbalken abgelegt wird. Damit läuft im Mähspalt zwischen dem letzten und dem vorletzten Mähteller ein Messer in Fahrtrichtung nach vorn und ein Messer entgegen der Fahrtrichtung nach hinten. Durch das Anheben des Stromes des Mähgutes durch den vorletzten Mähteller eines Zuges aus drei Mähtellern wird eine Umknickwirkung des Mähgutstroms auf das noch stehende Mähgut vor dem Schneiden vermieden. Insbesondere der Mähspalt zwischen dem letzten und vorletzten Mähteller eines Zuges liegt im unmittelbaren Fließbereich des Stromes des Mähgutes, und das in diesem Bereich noch nicht geschnittene Mähgut wird vom Strom des geschnittenen Mähgutes nicht getroffen und auch nicht umgeknickt, da das seitlich zufließende Mähgut angehoben ist. Durch das Anheben trifft der Strom des geschnittenen Mähgutes das noch nicht geschnittene Mähgut bestenfalls in seinem oberen Bereich, wodurch die Halme des nicht geschnittenen Mähgutes zwar leicht gebeugt werden, aber nicht soweit, daß sich dies nach dem Schnitt durch die Messer als längere Stoppel bemerkbar machen würde.

Durch das Anheben des Stromes des Mähgutes durch die Förderelemente wird außerdem verhindert, daß dieser unmittelbar vor die Messer benachbarter Mähteller fallen und den Schneidvorgang des noch ungeschnittenen Mähgutes an dieser Stelle negativ beeinflussen kann. Der letzte Mähteller eines Zuges aus drei Mähtellern trägt keine Förderorgane, wobei seine Mähscheibe bewußt ohne jegliche Elemente und Hindernisse gestaltet ist, damit der Mähgutstrom ungehindert nach hinten abfließen kann. Der Mähgutstrom erstreckt sich teilweise über diesen Mähteller hinweg. Sind zwei solche Züge aus je mindestens drei Mähtellern in symmetrischer Weise an einem Tellermähwerk verwirklicht, wie dies sinnvoll geschieht, dann werden die beiden Ströme des Mähgutes von der rechten und linken Seite des Mähwerks im Mittelbereich zusammengeführt, und es entsteht vorteilhaft ein Schwad geringer Ablagebreite, der in seinem Mittelbereich die größte Höhe aufweist. Die Messer der letzten Mähteller der beiden Züge laufen ihrem Mähspalt beide nach hinten, so daß mit Sicherheit an dieser Stelle eine Umknickwirkung auf das noch stehende Mähgut verhindert wird. Hieraus entsteht auch an dieser Stelle ein gleichmäßiges streifenfreies Schnittbild.

Die zusätzlich zu den Förderorganen vorgesehenen Förderelemente sind so ausgebildet, daß sie auf das Mähgut eine Anhebewirkung ausüben, also zumindest eine Kraftkomponente übertragen, die senkrecht zur Förderrichtung des Mähgutes nach oben gerichtet ist. Die Förderelemente sind als Förderrampen ausgebildet, die entgegen der Drehrichtung des Mähtellers ansteigende Flächen aufweisen, so daß in Verbindung mit der Drehrichtung des Mähtellers der Mähgutstrom angehoben wird. Es genügt eine Anhebewirkung, die in der Größenordnung von etwa 5 cm liegen kann.

Auf jeden Fall muß der vorletzte Mähteller eines Zuges aus drei Mähtellern die Förderelemente tragen. Es ist aber auch möglich, daß beide benachbarte Mähteller, die Förderorgane aufweisen, auch Förderelemente tragen. Hierdurch wird die Anhebewirkung verstärkt und vergleichmäßigt. Der vorletzte Mähteller wird diesbezüglich entlastet. Ein Zug von Mähtellern kann auch mehr als drei Mähteller aufweisen.

Die Förderelemente benachbarter Mähteller können in Förderrichtung des Mähguts mit sich verstärkender Anhebewirkung ausgebildet sein. Dies trägt dem anwachsenden Strom des Mähgutes in Förderrichtung Rechnung. Dabei kann die Ausbildung so gewählt sein, daß sich insgesamt ein etwa gleich hoch schwebender Teppich des Mähguts quer zur Förderrichtung ergibt, der erst im Bereich des letzten Mähtellers sich etwas nach unten verlagert. Im Einzelnen können die Förderelemente des letzten mit Förderorganen besetzten Mähtellers eine größere Steigung und/oder eine größere Abwurfhöhe als die Förderelemente des vorletzten mit Förderorganen besetzten Mähtellers aufweisen. Auch andere Ausführungsmöglichkeiten für eine sich in Förderrichtung verstärkende Anhebewirkung sind denkbar.

Die Förderrampen können konstanten Radius aufweisen, der größer als der kleine Halbmesser des eliptisch ausgebildeten Mähtellers ist. Damit ragen die äußeren Kanten der Förderrampen in einen Bereich vor, der teilweise außerhalb des eliptischen Umfangs des Mähtellers liegt. Der Radius ist freilich kleiner als der Radius, auf dem sich die Messer bewegen.

Es ist aber auch möglich, daß die Förderrampen entgegen der Drehrichtung des Mähtellers wachsenden Radius aufweisen, so daß auch von den Förderrampen eine unterstützende Wirkung auf die Querförderung durch die Förderorgane ausgeht. Die Förderorgane und die Förderelemente können baulich vereinigt sein, d. h. es ist möglich, solche Elemente auf den Mähtellern anzuordnen, die sowohl eine Querförderwirkung als auch eine Anhebewirkung auf das Mähgut ausüben.

Die Erfindung wird anhand eines bevorzugten Ausführungsbeispiels weiter erläutert und beschrieben. Es zeigen:
- Figur 1: eine schematisierte Draufsicht auf ein Tellermähwerk,
- Figur 2: eine Seitenansicht eines Mähtellers mit Förderorganen und Förderelementen und
- Figur 3: eine Draufsicht auf einen Mähteller mit Förderorganen und Förderelementen.

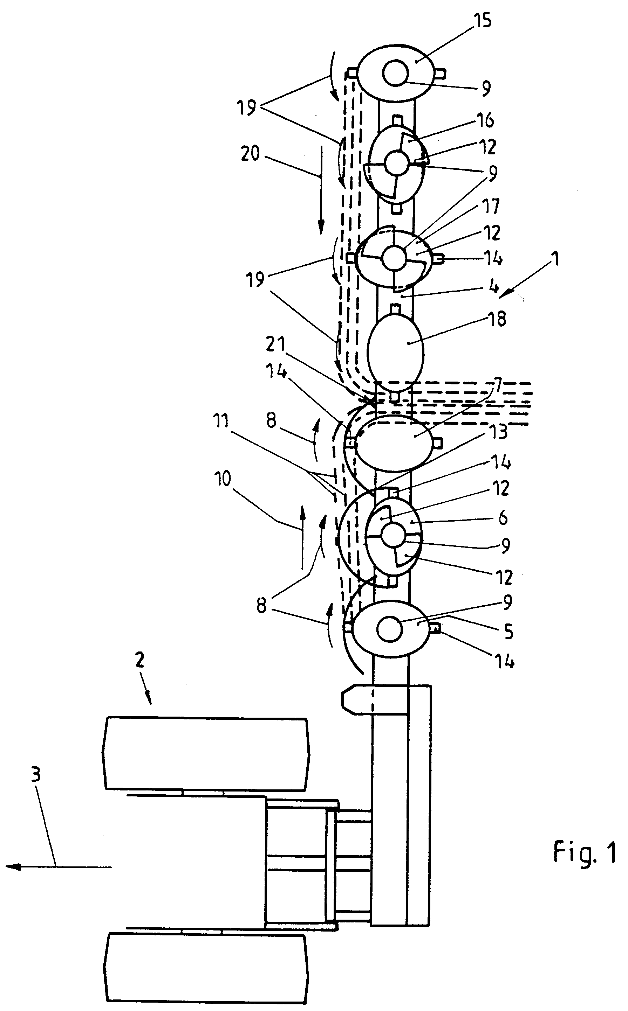

Das in Figur 1 dargestellte Tellermähwerk 1 ist am Heck eines Schleppers 2 angebracht. Die Fahrtrichtung 3 und damit auch die Arbeitsrichtung des Tellermähwerks 1 ist durch einen Pfeil verdeutlicht.

Das Tellermähwerk 1 weist einen Mähbalken 4 auf, der sich im wesentlichen quer, also senkrecht zur Fahrtrichtung 3 erstreckt. Der Mähbalken 4 kann aber auch geringfügig schrägstehend angeordnet sein. Auf dem Mähbalken 4 sind eine Reihe von Mähtellern nebeneinander angeordnet. Von innen nach außen bilden Mähteller 5, 6, 7 einen ersten Zug aus Mähtellern. Die Mähteller 5, 6, 7 sind übereinstimmend mit gleichem Drehsinn 8 gemäß den angegebenen Pfeilen rechtsdrehend angeordnet. Die beiden benachbarten Mähteller 5 und 6 sind mit Förderorganen 9 besetzt, die hier trommelartig mit zumindest etwa vertikaler Achse ausgebildet sind. Diese Förderorgane 9 sind auf die entsprechende Scheiben des Mähtellers 5 und 6 aufgesetzt und drehfest mit diesem verbunden. Infolge der Förderorgane 9 ergibt sich eine Förderrichtung 10 für das gestrichelt angedeutete Mähgut 11 in Richtung des angegebenen Pfeils, also quer zur Fahrtrichtung 3. Das Mähgut 11 gelangt somit von den beiden Mähtellern 5 und 6 in den Bereich des Mähtellers 7, also des letzten Mähtellers eines Zuges aus drei Mähtellern.

Der vorletzte Mähteller 6 eines Zuges aus drei Mähtellern 5, 6, 7 trägt außer den Förderorganen 9 noch Förderelemente 12, die eine anhebende Wirkung auf das geschnittene und quer geförderte Mähgut 11 ausüben. Dies führt dazu, daß das Mähgut im Bereich des Mähspaltes 13 zwischen den Mähtellern 6 und 7 durch die hebende Wirkung des Mähtellers 6 angehoben ist und daher keine abknickende Wirkung auf noch stehendes Mähgut unmittelbar vor dem Mähen ausüben kann. Der Strom des Mähgutes 11 im Bereich des Mähtellers 7 erreicht durch die vorangehende Anhebewirkung des Mähtellers 6 eine solche Lage, daß er ungehindert über den Mähteller 7 nach hinten abfließen und sich in einem Schwad relativ geringer Breite ablegen kann. Der Mähteller 7 trägt weder Förderorgane 9 noch Förderelemente 12. Die Oberfläche des Mähtellers 7 ist vielmehr glatt und ohne Hindernisse gestaltet, damit dieser Fluß des Mähgutes 11 entgegen der Fahrtrichtung 3 nicht gestört wird. Es ist erkennbar, daß der Mähteller 7 infolge seines Drehsinns 8, der mit dem Drehsinn 8 der vorangehenden benachbarten Mähteller 5 und 6 übereinstimmt, auch eine Stauwirkung auf das Mähgut 11 vermeidet. Auch im Mähspalt 13 zwischen den Mähtellern 6 und 7 laufen die Messer 14 der beiden benachbarten Mähteller 6 und 7 in unterschiedliche Richtungen, d. h. das Messer 14 des Mähtellers 6 läuft im Mähspalt 13 nach hinten. Das Messer 14 des Mähtellers 7 läuft im Mähspalt 13 nach vorn. Hierdurch wird vermieden, daß beide Messer zweier benachbarter Mähteller in dem jeweiligen Mähspalt beide nach vorn laufen, wodurch erfahrungsgemäß eine Abknickwirkung auf das noch stehende Mähgut ausgeübt werden kann, die sich in einem ungleichmäßigen Schnittbild äußert.

Die Erfindung wird an dem in Figur 1 dargestellten Tellermähwerk 1 noch ein zweites Mal angewendet. Wie ersichtlich sind hier vom äußeren Ende des Mähbalkens 4 beginnend die vier Mähteller 15, 16, 17, 18 zu einem Zug vereinigt. Die Mähteller 15, 16, 17, 18 werden mit übereinstimmendem Drehsinn 19 gemäß den angegebenen Pfeilen linksdrehend angetrieben. Die dem letzten Mähteller 18 vorangehenden Mähteller 15, 16, 17 sind mit Förderorganen 9 versehen. Der vorletzte Mähteller 17 ist zusätzlich mit Förderelementen 12 ausgestattet. Auch der vorangehende Mähteller 16 besitzt Förderelemente 12. Der Mähteller 15 besitzt keine Förderelemente. Der letzte Mähteller 18 besitzt weder Förderorgane 9 noch Förderelemente 12. Der Mähteller 15 könnte - entgegen seiner zeichnerischen Darstellung - zusätzlich auch mit Förderelementen 12 versehen sein. Infolge des übereinstimmenden Drehsinns 19 der Mähteller 15, 16, 17, 18 ergibt sich für das gestrichelt angedeutete Mähgut eine Förderrichtung 20 quer zur Fahrtrichtung 3, die nach innen gerichtet ist. Es ist erkennbar, wie die beiden Züge aus den Mähtellern 5, 6, 7 einerseits und den Mähtellern 15, 16, 17, 18 andererseits im wesentlichen symmetrisch zueinander ausgebildet und angeordnet sind. Wenn auf einem Mähbalken 4 beispielsweise insgesamt sechs Mähteller angeordnet sind, kann eine genau symmetrische Ausbildung getroffen werden.

Die beiden benachbarten Mähteller 7 und 18, die jeweils die letzten Mähteller eines jeden Zuges darstellen, weisen Messer 14 auf, die im gemeinsamen Mähspalt 21 beide nach hinten, also entgegengesetzt zur Fahrtrichtung 6 verlaufen. Damit ist sichergestellt, daß an dieser Stelle eine Umknickwirkung auf das noch nicht abgeschnittene Mähgut vermieden wird. Das sich ergebende Schnittbild ist auch in diesem Bereich streifenlos und gleichmäßig. Die beiden von rechts und von links herangeführten Mähgutströme, die beide gegenüber der Schneidebene der Messer 14 angehoben sind, vereinigen sich im Bereich der letzten Mähteller 7 und 18 zu einem gemeinsamen Mähgutstrom, der sich als Schwad geringer Breite ablegt. Es entsteht ein gleichmäßiges Schnittbild ohne Streifen.

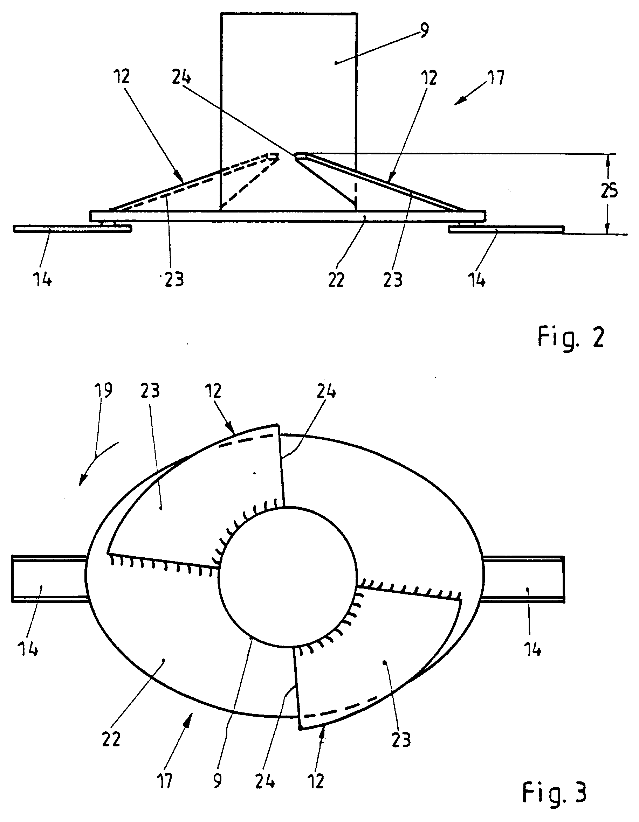

In den Figuren 2 und 3 ist der Mähteller 17 des Ausführungsbeispiels der Figur 1 dargestellt. Man erkennt, daß der Mähteller 17 einen flachen scheibenförmigen Grundkörper 22 besitzt, der eliptische Gestalt aufweist. Im Bereich seiner großen Halbachsen sind die Messer 14 frei schwenkbar aufgehängt. In der Mitte trägt der Mähteller 17 bzw. der Grundkörper 22 ein Förderorgan 9, welches hier als Trommel mit etwa senkrechter Achse ausgebildet ist. Als Förderelemente 12 dienen zwei Förderrampen 23, die nach Art eines Schraubenganges ausgebildet und mit dem Grundkörper 22 bzw. dem Förderorgan 9 in der gezeigten Weise verbunden, beispielsweise verschweißt sind. Die in Drehrichtung vorderen Kanten der Förderrampen 23 schließen an die Oberfläche des Grundkörpers 22 an, während die hinteren Kanten 24 sich etwa horizontal um eine Abwurfhöhe 25 oberhalb der durch die Messer 14 festgelegten Schneidebene befinden. Das Mähgut 11 wird durch die Einwirkung der Förderrampen 23 um die Abwurfhöhe 25 angehoben. Aus Figur 3 ist ersichtlich, daß die Förderrampen 23 konstanten Außendurchmesser aufweisen. Sie besitzen ansteigende Flächen entsprechend der gewählten Steigung. Die Anzahl der Förderrampen 23, ihre Steigung, ihre tangentiale Erstreckung sowie die Abwurfhöhe 25 kann entsprechend der gewünschten Hebewirkung und des zu erwartenden Massestromes an Mähgut 11 gewählt werden. Zwei in Förderrichtung 20 aufeinanderfolgende benachbarte Mähteller 16, 17 können hinsichtlich der Förderrampen 23 so gestaltet sein, daß der vorletzte Mähteller 17 eine größere Anhebewirkung auf das Mähgut 11 ausübt als der vorangehende Mähteller 16.

### BEZUGSZEICHENLISTE

- 1: - Tellermähwerk
- 2: - Schlepper
- 3: - Fahrtrichtung
- 4: - Mähbalken
- 5: - Mähteller
- 6: - Mähteller
- 7: - Mähteller
- 8: - Drehsinn
- 9: - Förderorgan
- 10: - Förderrichtung
- 11: - Mähgut
- 12: - Förderelement
- 13: - Mähspalt
- 14: - Messer
- 15: - Mähteller
- 16: - Mähteller
- 17: - Mähteller
- 18: - Mähteller
- 19: - Drehsinn
- 20: - Förderrichtung
- 21: - Mähspalt
- 22: - Grundkörper
- 23: - Förderrampe
- 24: - Kante
- 25: - Abwurfhöhe

## Patentansprüche

1. An einem Schlepper ansetzbares Tellermähwerk, mit einem sich im wesentlichen quer zur Fahrtrichtung (3) erstreckenden Mähbalken (4), auf dem mindestens drei Mähteller (5, 6, 7; 15, 16, 17, 18) nebeneinander angeordnet sind, die gleichsinnig umlaufend angetrieben sind und von denen zwei benachbarte Mähteller (5, 6; 16, 17) mit das Mähgut (11) im wesentlichen in einer Förderrichtung (10, 20) quer zur Fahrtrichtung (3) fördernden Förderorganen (9) versehen sind, deren größter Außendurchmesser etwa halb so groß wie der Durchmesser der Mähteller (5, 6; 16, 17) ist, während der den beiden benachbarten Mähtellern (5, 6: 16, 17) in Förderrichtung (10, 20) des Mähgutes (11) folgende dritte Mähteller (7; 18) keine Förderorgane trägt, **dadurch gekennzeichnet**, daß zumindest der dem dritten Mähteller (7; 18) vorangehende Mähteller (6; 17) zusätzlich zu den im wesentlichen quer zur Fahrtrichtung (3) fördernden Förderorganen (9) weitere, separate Förderelemente (12) aufweist, die als Förderrampen (23) ausgebildet sind und entgegen der Drehrichtung des Mähtellers (6; 16, 17) ansteigende Flächen aufweisen, sodaß das Mähgut von den Förderelementen (12) im wesentlichen aus der Schneidebene der Mähteller angehoben wird.

2. Tellermähwerk nach Anspruch 1, **dadurch gekennzeichnet**, daß beide benachbarte Mähteller (5, 6; 16, 17), die Förderorgane (9) aufweisen, auch Förderelemente (12) tragen.

3. Tellermähwerk nach Anspruch 1, **dadurch gekennzeichnet**, daß die Förderelemente (12) benachbarter Mähteller (5, 6; 16, 17) in Förderrichtung (10, 20) des Mähguts (11) mit sich verstärkender Anhebewirkung ausgebildet sind.

4. Tellermähwerk nach Anspruch 3, **dadurch gekennzeichnet**, daß die Förderelemente (12) des letzten mit Förderorganen (9) besetzten Mähtellers (17) eine größere Steigung und/oder eine größere Abwurfhöhe (25) als die Förderelemente (12) des vorletzten mit Förderorganen (9) besetzten Mähtellers (16) aufweisen.

5. Tellermähwerk nach Anspruch 1, **dadurch gekennzeichnet**, daß die Förderrampen (23) konstanten Radius aufweisen, der größer als der kleine Halbmesser des elliptisch ausgebildeten Mähtellers (6; 16, 17) ist.

6. Tellermähwerk nach Anspruch 1, **dadurch gekennzeichnet**, daß die Förderrampen (23) entgegen der Drehrichtung des Mähtellers wachsenden Radius aufweisen.

## Claims

1. A disc mower being connectable to a tractor, including a mowing bar (4) extending substantially transverse to the direction of movement (3), at least three mowing discs (5, 6, 7; 15, 16, 17) being arranged side by side on the mowing bar (4) and being driven to rotate in the same sense of rotation, two adjacent mowing discs (5, 6; 16, 17) including conveying units (9) substantially conveying the material to be mowed (11) in a conveying direction (10, 20) transverse to the direction of movement (3), the biggest outer diameter of the conveying units (9) being approximately half as big as the diameter of the mowing discs (5, 6; 16, 17), whereas the third mowing disc (7; 18) following the two adjacent mowing discs (5, 6; 16, 17) in the conveying direction (10, 20) of the material to be mowed (11) does not carry conveying units, **characterized in** that at least the mowing disc (6; 17) preceding the third mowing disc (7; 18) in addition to the conveying elements (9) substantially conveying transverse to the direction of movement (3) further includes separate conveying elements (12) being designed as conveying ramps (23) and including surfaces inclining against the sense of rotation of the mowing disc (6; 16, 17) such that the material to be mowed is raised by the conveying elements (12) substantially out of the cutting plane of the mowing discs.

2. The disc mower of claim 1, **characterized in** that both adjacent mowing discs (5, 6; 16, 17) including conveying units (9) also carry conveying elements (12).

3. The disc mower of claim 1, **characterized in** that the conveying elements (12) of adjacent mowing discs (5, 6; 16, 17) are designed to have an increased raising effect in the conveying direction (10, 20) of the material to be mowed (11).

4. The disc mower of claim 3, **characterized in** that the conveying elements (12) of the last mowing disc (17) including conveying units (9) have a bigger gradient of inclination and/or a bigger throw off height (25) than the conveying elements (12) of the next to last mowing disc (16) including conveying units (9).

5. The disc mower of claim 1, **characterized in** that the conveying ramps (23) have a constant radius being bigger than the small semidiameter of the elliptical mowing disc (6; 16, 17).

6. The disc mower of claim 1, **characterized in** that the conveying ramps (23) have a radius increasing against the sense of rotation of the mowing disc.

## Revendications

1. Faucheuse à disques accouplable à un tracteur avec une barre de coupe (4) s'étendant en substance transversalement par rapport à la direction de marche (3), barre sur laquelle sont disposés côte à côte au moins trois disques de fauchage (5, 6, 7; 15, 16, 17, 18) qui sont entraînés à rotation dans le même sens et dont deux disques de fauchage contigus (5, 6; 16, 17) sont pourvus d'organes transporteurs (9) transportant les produits de fauchage (11) dans une direction de transport (10, 20) transversale par rapport à la direction de marche (3), organes transporteurs dont le plus grand diamètre extérieur est d'environ la moitié du diamètre des disques de fauchage (5, 6; 16, 17), tandis que le troisième disque (7; 18) suivant en direction de transport (10, 20) les deux disques de fauchage (5, 6; 16, 17) contigus ne porte pas d'organes transporteurs, caractérisée
en ce qu'au moins le disque de fauchage (6 ; 17) qui précède le troisième disque de fauchage (7 ; 18) présente d'autres éléments transporteurs (12) distincts qui complètent les organes transporteurs (9) transportant les produits de fauchage dans une direction en substance transversale à la direction de marche (3), éléments transporteurs qui ont la forme de rampes transporteuses (23) présentant des surfaces s'élevant en sens inverse du sens de rotation du disque de fauchage (6; 16, 17), de sorte que les produits de fauchage sont sensiblement soulevés par les éléments transporteurs (12) qui les dégagent du plan de coupe des disques de fauchage.

2. Faucheuse à disques suivant la revendication 1, caractérisée
en ce que deux disques de fauchage contigus (5, 6; 16, 17) qui présentent des organes transporteurs (9) présentent également des éléments transporteurs (12).

3. Faucheuse à disques suivant la revendication 1, caractérisée
en ce que les éléments transporteurs (12) de disques de fauchage contigus (5, 6; 16, 17) sont conçus pour présenter une action ascensionnelle allant se renforçant en direction de transport (10, 20) des produits de fauchage (11).

4. Faucheuse à disques suivant la revendication 3, caractérisée
en ce que les éléments transporteurs (12) du dernier disque de fauchage (17) équipé d'organes transporteurs (9) présentent une pente et/ou une plus grande hauteur d'éjection (25) que les éléments de transport (12) de l'avant-dernier disque de fauchage (16) équipé d'organes transporteurs (9).

5. Faucheuse à disques suivant la revendication 1, caractérisée
en ce que les rampes transporteuses (23) présentent un rayon constant, ce rayon étant plus grand que la moitié du petit diamètre du disque de fauchage elliptique (6; 16,17).

6. Faucheuse à disques suivant la revendication 1, caractérisée
en ce que les rampes transporteuses (23) présentent un rayon qui augmente en sens opposé du sens de rotation du disque de fauchage.
